# EUROPEAN PATENT APPLICATION

(11) **EP 4 813 671 A1**
(43) Date of publication of application: **30.09.2026**
(21) Application number: 26180019.7
(22) Date of filing: 31.03.2023
(51) Int. Cl.: B60C 11/03, B60C 11/12, B60C 11/13

(54) **TIRE WITH AN IMPROVED TREAD PATTERN**

(62) Document number(s) of the earlier application(s) in accordance with Art. 76 EPC: 23165911.1 / 4 438 337
(71) Applicant: Bridgestone Europe NV/SA, 1930 Zaventem (BE)
(72) Inventor: PISCOPO, Guido, 00128 Rome (IT)
(74) Representative: Bardehle Pagenberg Partnerschaft mbB Patentanwälte Rechtsanwälte

(57) **Abstract**

According to aspects of the invention, a tire for a vehicle comprising a tread is provided. The tread comprises a set of consecutive blocks arranged along a circumference of the tire, each of the set of consecutive blocks comprising a first portion arranged at a shoulder portion of the tire, and a second portion arranged in axial direction towards an equatorial plane of the tire with respect to the first portion, a plurality of first grooves arranged over the circumference of the tire, wherein each of the plurality of first grooves is arranged between two blocks of the set of consecutive blocks; a plurality of second grooves, wherein each of the second grooves is arranged between the first portion and the second portion of each of the set of blocks; and at least one recess arranged in at least one of the first portion and the second portion of each block, the recess arranged adjacent to the second groove.

## Description

### Field of the disclosure

The present invention relates to a vehicle tire. One possible application of the disclosed tire relates to an all-season tire intended to equip a passenger vehicle or commercial van vehicles. The disclosure can also be applied to other tires, for example winter tires, summer tires or tires for off the road applications.

### Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.

For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

Some known tires are provided with grooves extending in a block in substantially circumferential direction between two consecutive grooves that extend substantially in axial direction. These grooves are arranged between a shoulder portion of the block and the more interior portions, sometimes denoted as intermediate portion and central portion. The shoulder portion of the block is mostly intended to provide acceleration and breaking performance, because it is generally arranged perpendicular to a rolling direction, e.g., in V-shaped or S-shaped treads, such that it is intended to provide a friction force parallel to the driving direction, such as breaking force or accelerating force. Thus, breaking and accelerating leads to deformation of the blocks, especially in the shoulder portion. To still ensure steering performance and to prevent contact loss of the rubber with the ground a groove between the shoulder portion and an axially more inward portion, sometimes denoted as the intermediate portion, is provided.

However, such grooves bear the disadvantage of locally increasing the tire's wear energy due to the additional edges. This leads to higher total wear of the tread profile and to uneven wear, as wear occurs predominantly around the second grooves.

Thus, it is an object of the present invention to mitigate these disadvantages and to provide a tire with comparable breaking and accelerating performance which has lower total wear and whose wear is distributed more evenly over the total width of the tread.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive blocks arranged along a circumference of the tire, each of the set of consecutive blocks comprising a first portion arranged at a shoulder portion of the tire, and a second portion arranged in axial direction towards an equatorial plane of the tire with respect to the first portion, a plurality of first grooves arranged over the circumference of the tire, wherein each of the plurality of first grooves is arranged between two blocks of the set of consecutive blocks; a plurality of second grooves, wherein each of the second grooves is arranged between the first portion and the second portion of each of the set of blocks; and at least one recess arranged in at least one of the first portion and the second portion of each block, the recess arranged adjacent to the second groove.

Such a tire has locally reduced stiffness of the block which contributes to the decoupling of the different portions of the block. This allows for providing a narrower groove than without the recess, which reduces wear energy without losing the decoupling effect. Thus, the wear of the tire can be reduced by providing a narrower second groove, but because of the additional provision of the at least one recess (below also referred as "recesses", given that typical tread patterns will have more than one of these recesses) adjacent to the second groove, the breaking performance as well as the steering performance do not suffer significant losses by the reduction of the groove width. In fact, the reduced width of the groove is beneficial to the breaking performance, as there is a larger tread surface in contact with the ground and the parts of the block located towards the shoulder benefit from the increased stiffness. The recesses then provide for better decoupling of the shoulder portion of the block and the axially more interior parts.

Moreover, by means of the recesses a further edge is provided on the block of the tire, which leads to improved performance on snow-covered grounds.

In addition to the wear reduction, a narrower groove also improves water drainage. Water which is guided outward from a contact patch of the tire through the grooves that extend in substantial axial direction - herein also referred to as "first grooves" - can be disturbed by turbulences created around the edges of the second grooves. A narrower second groove produces less turbulences, which improves water drainage and avoids hydroplaning, thus improving the tire's overall performance on wet road surfaces.

Such a tire further provides for an increased contact patch of the tire which allows for improved tire traction on wet and dry as well as snow-covered ground. Specifically, this is achieved by providing the recess, which improves the bending capability of the tire. Locally reducing the stiffness of a block by providing a recess can configure the block portion around the recess to behave as a hinge, allowing the tire to bend in a desired position, such that a tire, which is generally shaped in a convex manner, is enabled to adapt to a substantially flat ground. Moreover, the improved bending further leads to a more uniform distribution of contact pressure over the contact patch, which provides for a more uniform distribution of wear energy.

### Brief description of the Figures

Fig. 1 shows a sketch of a vehicle tire according to the present disclosure.
Fig. 2 illustrates a half tread profile of a tire according to the present disclosure.
Fig. 3A illustrates a close-up view of a shoulder portion of a block according to the present disclosure.
Fig. 3B illustrates a close-up view of the second groove and the recesses adjacent thereto.
Figs. 4A to 4D illustrate several exemplary embodiments of the disposal of recesses according to the present disclosure.
Fig. 5 illustrates an exemplary embodiment of a V-shaped directional tread pattern according to the present disclosure.
Fig. 6 illustrates an exemplary embodiment of an S-shaped tread pattern according to the present disclosure.
Fig. 7 depicts two graphs, illustrating measurements results of wear energy in different widths of the tire.

### Detailed Description

To overcome the disadvantages of the prior art as discussed above, the invention aims at providing a groove that separates the shoulder portion from the intermediate portion - herein also referred to as a "second groove" - which is narrower than the grooves known from the prior art, because the local wear energy in proximity to the groove increases with groove width. Thus, a narrower groove may reduce the wear energy. However, a narrow groove also interferes with the purpose of mechanically decoupling of the shoulder portion from the rest of the block to mitigate the deformation effects that occur e.g. during braking on the rest of the block. I.e., if the groove is very narrow, the shoulder portion and the intermediate portion of the block may come into contact inside the contact patch of the tire, such that the desired decoupling of the two portions is impaired. In other words, while a very narrow groove reduces local wear energy, it may also reduce breaking performance, as well as steering performance, especially during breaking/acceleration, due to loss of the decoupling effect.

To reconcile both objectives, the present invention discloses a tire that comprises at least one recess arranged in at least one of the first portion and the second portion of each block, the recess being arranged adjacent to the second groove. Such a recess is configured to locally reduce the stiffness of the block and therefore contributes to the decoupling of the different portions of the block. This allows for providing a narrower groove than without the recess, which reduces wear energy without losing the decoupling effect. Thus, the wear of the tire can be reduced by providing a narrower second groove, but because of the additional provision of recesses adjacent to the second groove, the breaking performance as well as the steering performance do not suffer significant losses by the reduction of the groove width.

In addition to the wear reduction, a narrower groove also improves water drainage. Water which is guided outward from a contact patch of the tire through the grooves that extend in substantial axial direction - herein also referred to as "first grooves" - can be disturbed by turbulences created around the edges of the second grooves. A narrower second groove produces less turbulences, which improves water drainage and avoids hydroplaning, thus improving the tire's overall performance on wet road surfaces.

The recess further provides for improved bending capability of the tire. Locally reducing the stiffness of a block by providing a recess can configure the block portion around the recess to behave as a hinge, allowing the tire to bend in a desired position, such that a tire, which is generally shaped in a convex manner, is enabled to adapt to a substantially flat ground. The improved bending capability of the recesses may thus increase a contact patch of the tire which allows for improved tire traction on wet and dry as well as snow-covered ground.

In preferred embodiments, described in more detail below, further improvement for traction on snow-covered ground is gained by additionally providing sipes, which are small incisions in a block, typically, but not necessarily, extending in substantially axial direction. Such sipes are configured to trap snow therein and provide an additional edge to increase performance on snow-covered road surfaces. Providing multiple sipes, which would further increase snow performance, lowers the stiffness of the blocks and thus impairs dry and wet performance, so preferably only few sipes per block, most preferably only one sipe per block, are provided the tires to achieve an acceptable trade-off between snow and wet/dry performance.

A "groove" represents an incision in the tread pattern. A width of the groove may vary, for example, the first groove may be of larger width than the second groove or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example, a depth of least 1 mm, preferably at least 3 mm, is considered.

A "sipe" also represents an incision in the tread pattern. Reference herein to a "sipe" means an incision within a block, rather than a "groove" that separates blocks. For example, the width of sipe may also be smaller than the width of a groove, and be for example of less than 2 mm. Just as is the case for the groove, the width of a sipe does not have to be constant and means can be applied to allow for a wider width towards the opening of the tread pattern, and a smaller width in radial inward direction. Also, a depth of a sipe may vary, and sometimes a sipe may extend at full tread block depth, but this does not necessarily have to be the case. For example, a depth of at least 1 mm, preferably at least 20% of the depth of the first grooves, is considered.

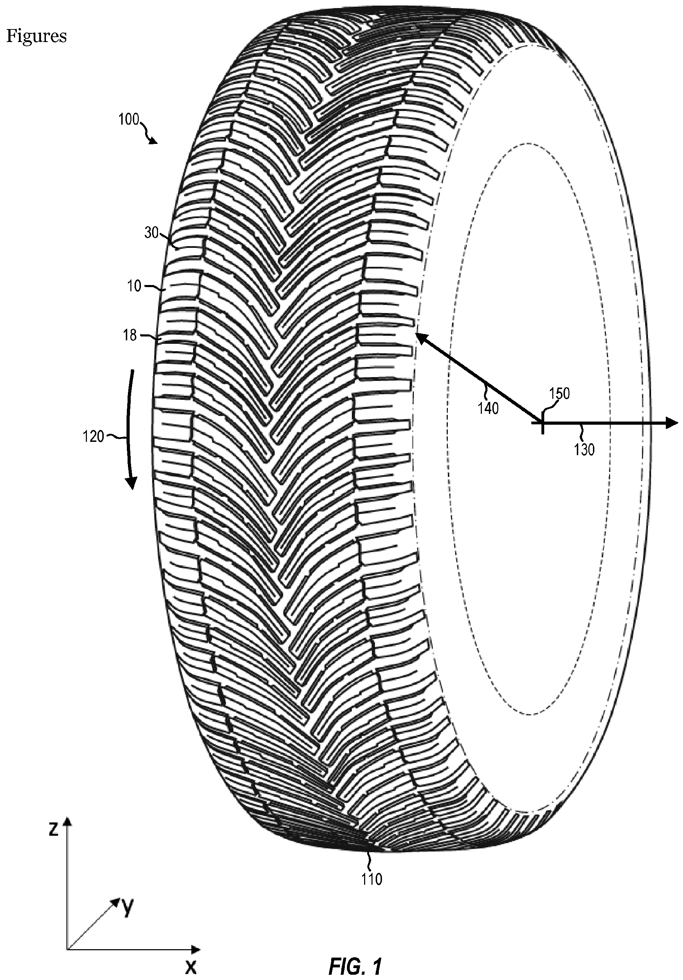

Fig. 1 shows a sketch of a vehicle tire according to the present disclosure.

According to Fig. 1, the tire 100 comprises a tread 110. The tread comprises a set of consecutive blocks 10 as well as a plurality of grooves 18, each groove 18 arranged between two blocks 10 of the set of consecutive blocks. Moreover, a sipe 30 may be arranged within each of the set of consecutive blocks 10.

The blocks may be arranged consecutively a circumferential direction 120 of the tire.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

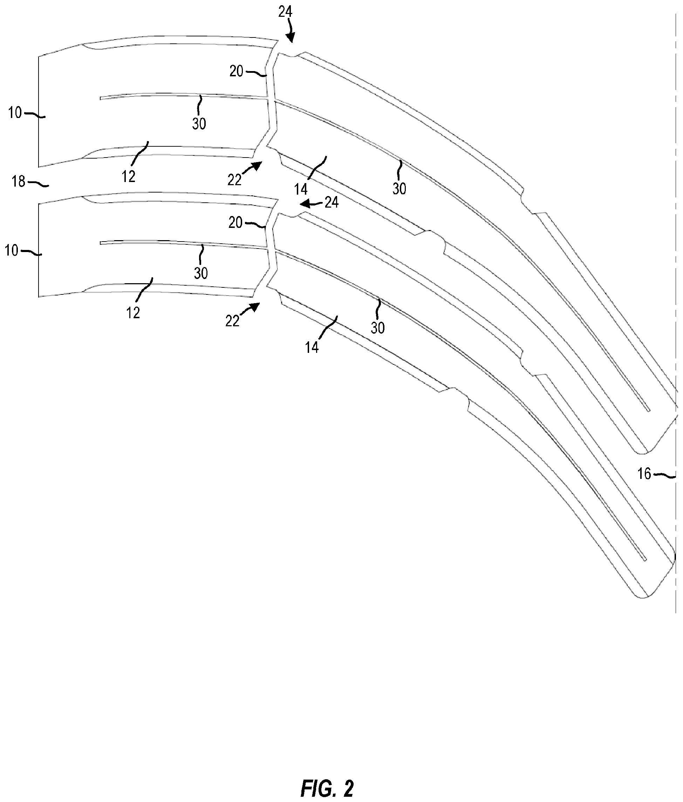

Fig. 2 shows a half tread profile of a tire according to the present disclosure. According to Fig. 2, the tread of the tire comprises a set of consecutive blocks 10 arranged along a circumference of the tire. "Consecutive blocks" in within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise second grooves or recesses.

Each of the set of consecutive blocks 10 comprises a first portion 12 arranged at a shoulder portion of the tire and a second portion 14 arranged in axial direction towards an equatorial plane 16 of the tire with respect to the first portion. In some embodiments, described in more detail elsewhere herein, the tread comprises further blocks on the other side of the equatorial plane 16 of the tire. In some embodiments described elsewhere herein, these further blocks may have axisymmetric configuration with respect to the blocks 10 shown in Fig. 2, such that the overall pattern is V-Shaped. In other embodiments described elsewhere herein, the further blocks may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns have substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 18 arranged over the circumference of the tire, wherein each of the plurality of first grooves 18 is arranged between two blocks 10 of the set of consecutive blocks. Preferably, the grooves 18 start near the equatorial plane 16 of the tire and extend towards a shoulder end of the tread to open at the outer edge of the tire. The grooves 18 are generally delimited by the adjacent blocks 10.

The purpose of the grooves 18 is mainly the drainage of water from the contact patch by guiding the water along the groove 18 towards the shoulder of the tire and eject the water from there, as the tire rolls on the ground. Thus, the grooves 18 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

According to Fig. 2, the tread further comprises a plurality of second grooves 20, wherein each of the second grooves 20 is arranged between the first portion 12 and the second portion 14 of each of the set of blocks 10. In some embodiments, each second groove 20 is arranged in a substantially circumferential direction. In some embodiments, each second groove 20 may be arranged as a substantially straight line, e.g., with a small inclination with respect to the circumferential direction; in other embodiments, as shown for example in Fig. 2, each second groove 20 may be arranged with a zigzag form, e.g., including three differently inclined parts. The zigzag form of the second groove 20 allows for a partial interruption of the strain and slippage behavior of the tire, thus improving the distribution of wear energy over the axial extension of the block 10.

The second grooves generally have the purpose of decoupling the first portions 12 of the blocks 10 from the second portions 14 of the blocks 10. For example, during acceleration or breaking, the first portion of a block 10 may be especially strained because it is arranged generally perpendicularly to a circumferential direction of the tire. This may lead to deformation of the block 10 in the first portion 12. To ensure good steering performance as well as lateral road holding also during breaking and acceleration, it is thus desirable to mechanically decouple the first portion 12 from the second portion 14 of the block 10. This decoupling is preferably achieved by providing a second groove 20 therebetween. This way, the second portion 14 still provides for lateral road holding and steering performance despite the deformation of the first portion 12. A wider second groove improves the decoupling effect compared to a second groove of smaller width.

However, providing the second groove 20 leads to increased local wear energy due to the additional edge provided in the block. This local wear energy increases with a wider second groove 20. Thus, it is desirable to provide the second groove 20 as narrow as possible to reduce wear energy, but a narrower second groove 20 worsens the decoupling effect, as explained. In the most extreme case of no second groove 20 at all, there is no increased wear energy at all, which is desired, but also no mechanical decoupling, which is disadvantageous. Consequently, some tradeoff must be made between tire wear and mechanical decoupling of the first portion 12 and the second portion 14.

This tradeoff can be improved by providing at least one recess 22 arranged in at least one of the first portion 12 and the second portion 14 of each block 10, the recess 22 arranged adjacent to the second groove 20. The recess 22 locally reduces the circumferential extension of the block 10, such that the stiffness of said block 10 is also reduced at the position of the recess 22. Consequently, the recess 22 contributes to the mechanical decoupling of the first portion 12 from the second portion 14 without significantly contributing to the locally increased wear energy. Thus, when a recess 22 is provided, the second groove 20 can be narrower, thus reducing the local wear energy without losing the benefits of the mechanical decoupling of first portion 12 and second portion 14.

The arrangement of the recess 22 is preferrable such that the second groove 20 transitions into the recess 22. In other words, in this configuration, each second groove 20 and each recess 22 form a continuous void. Both the recess 22 and the second groove 20 may thus jointly transition into the first groove 18, thus forming a continuous void with the first groove 18.

It should be well-understood that while providing a single recess achieves the technical effect described, providing two or more recesses arranged at a single block may, depending on the tread design, lead to further improvements. For example, as shown, a first recess 22 may be arranged at the second portion 14 of the block, and a second recess, e.g. recess 24, may be arranged at the first portion 12 of the block. The first and the second recesses are also arranged adjacent to the second groove 20, thus, further enlarging the void formed compared to a configuration where only a single recess 22 is applied. Moreover, a configuration where two recesses are provided per block can be applied for each block 10 of the set of consecutive blocks. Alternatively, some of the blocks 10 may be provided with only one recess (e.g., at the second portion of the block), while other blocks 10 may be provided with more than one recess (e.g., a first recess at the second portion of the block, and a second recess at the first portion of the block).

In some embodiments, the width of the each of the plurality of second grooves 20 may be substantially narrower than the width of each of the plurality of first grooves 18. When comparing the widths of the first groove 18 and the second groove 20, the average width of the second groove 20 is to be considered, as well as the width of the first groove 18 at a position adjacent to the second groove 20.

Preferably, a ratio between the average width of the second groove 20 and the width of the first grooves 18 measured at a position adjacent to the second groove may be at least 0.1 and at most 0.7. Preferably, a ratio between the width of the second groove 20 and the first grooves 18 may be at least 0.13 and at most 0.45.

This allows for a good tradeoff between low wear energy and good mechanical decoupling of the first portion 12 and the second portion 14.

In some embodiments, the width of each of the plurality of second grooves may be at least 1 mm and at most 2.5 mm. Preferably, the width of the second grooves may be at least 1.2 mm and at most 2.2 mm.

In some embodiments, each block may comprise a leading edge and a trailing edge. The one or more recesses 22 may be further arranged in at least one of the leading edge and the trailing edge of the at least one of the first portion and the second portion of each block. Thus, various configurations of arranging the recess or recesses are possible: For example, a recess 22 may also be arranged at both the leading and the trailing edge of the first portion of each block, or be arranged at both the leading and the trailing edge of the second portion of each block, or be arranged at the leading edge of one of the first or second portion of each block and at the trailing edge of one of the first or second portion of each block.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

Providing two recesses as outlined above further improves the effects of the recess 22, namely locally reducing the circumferential extension of the block 10, such that the stiffness of said block 10 is also reduced between the first recess 22 and the second recess 24. Consequently, the recesses 22, 24 contribute to the mechanical decoupling of the first portion 12 from the second portion 14 without significantly contributing to the locally increased wear energy.

According to Fig. 2, the tread may further comprise a plurality of sipes 30. In the shown tread pattern, each of the plurality of sipes 30 may preferably extend substantially along a shape of at least one of the first portion 12 and the second portion 14 of each of the set of consecutive blocks 10. However, other arrangements and shapes of the sipes on the outer tread surface are also possible, for example wavy shapes, zigzag shapes, and the like. The sipes do not necessarily have to follow the shape of the block. For example, the sipes may only be included along a part of the shape of the block or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may also be inclined with respect to the radial direction. Some sipes may comprise protrusions near a bottom of the sipe.

Sipes 30 are capable of trapping snow therein and providing an additional edge of the tread. This improves traction on snow-covered grounds.

In some embodiments, the plurality of sipes 30 may define an edge ingredient (EI) corresponding to the ratio between the sum of the projected lengths of the plurality of sipes in an axial direction (SAP) and the circumference of the tread (C), such that $EI = \frac{\sum SAP}{C} ,$ wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

Preferably, the edge ingredient is balanced with the provision of the recess(es) and the second groove. For example, as the recess locally reduces stiffness, the edge ingredient should remain within the range indicated, to ensure sufficient stiffness. Also, since the recess(es) contribute to snow trapping, less sipes, or sipes of smaller lengths, may be needed. If more than one recess is provided per block, and/or if the one or more recesses are of larger surface, providing an edge ingredient within the lower part of the range, e.g., of at least 2 and at most 10, may be beneficial.

The tire according to Fig. 2 may further have a void volume, being the volume of all grooves, sipes and recesses provided in the tread, and a volume of rubber provided in the tread, together making up the total volume of the tread. I.e., if the total volume of the tire is V_{T}, the void volume being V_{V} and the rubber volume being V_{R}, then the total volume V_{T} would be V_{T}=V_{V}+V_{R}. In a preferred embodiment, the ratio V_{V}/V_{R} between the void volume V_{V} and the rubber volume V_{R} may be at least 0.20 and at most 0.40. Preferably, the ratio V_{V}/V_{R} may be at least 0.24 and at most 0.37, more preferably at least 0.28 and at most 0.35. The ratio V_{V}/_{VR} is directly linked to the stiffness of the tread profile. Thus, a higher ratio V_{V}/V_{R} indicates a higher amount of void in the tread, which leads to lower stiffness of the tread, and thus benefits snow performance. A lower ratio V_{V}/V_{R} indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

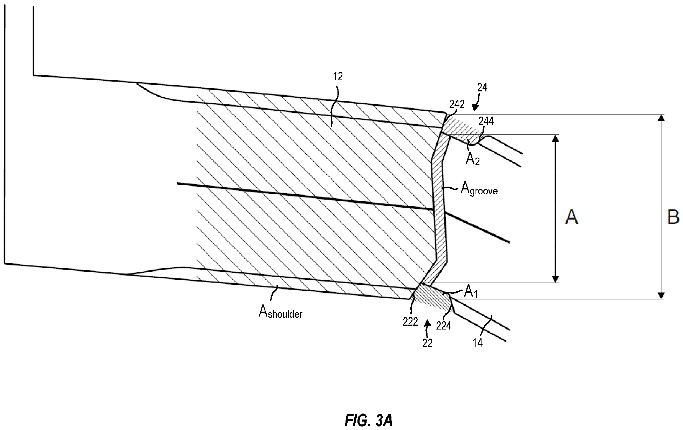

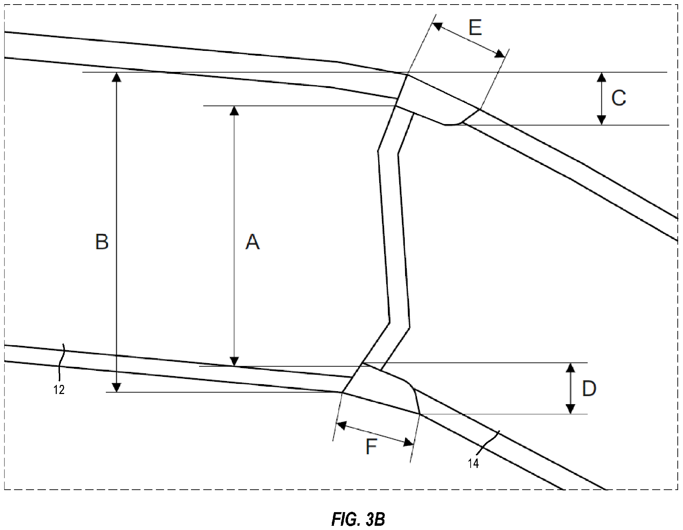

Fig. 3 shows a close-up view of the first portion 12 of the block 10 according to the present disclosure.

The arrangement illustrated isn Fig. 3A generally corresponds to the embodiment shown in Fig. 2, wherein the block comprises a first portion 12 and a second portion 14, the second groove 20, the first recess 22 and the second recess 24.

According to Fig. 3A, the first recess 22 has a first recess area A₁, the second recess 24 has a second recess area A₂, and the second groove 20 has a groove area A_{groove}. Moreover, the first portion 12 has an area A_{shoulder}. Towards the outer end of Fig. 3, the area A_{shoulder} of the first portion 12 is delimited by the outer edge of a contact patch of the tire. The measurement of the width of the contact patch is described elsewhere herein.

In some embodiments, the block 10 may further comprise one or more chamfers on at least one of the leading edge and the trailing edge. Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block, and may for example be at most 50% or less than the total height of the block. The width of the chamfer may be measured perpendicular to the block and corresponds to the width of the inclined chamfer wall when projected onto the outer tread surface.

If the block 10 comprises such a chamfer in the first portion 12, for determining the area A_{shoulder}, the area of the chamfer is to be regarded as belonging to the area of the first portion 12. Thus, for determining the area A_{shoulder}, the chamfer is disregarded, i.e., the radially innermost edge of the chamfer is projected onto the outermost tread surface, and the projected edge is considered to define the circumferential boundary of the shoulder area.

In some embodiments, the ratio (A₁+A₂)/A_{groove} between (i) a sum A₁+A₂ of the first recess area A₁ and the second recess area A₂ and (ii) the groove area A_{groove} is at least 0.3 and at most 1.4. Preferably, the ratio (A₁+A₂)/A_{groove} may be at least 0.4 and at most 1.1.

In some embodiments, the ratio A_{groove}/A_{shoulder} between (i) the area A_{groove} of the second groove 20 and (ii) the area A_{shoulder} of the first portion 12 may be at least 0.020 and at most 0.100. Preferably, the ratio A_{groove}/A_{shoulder} may be at least 0.02 and at most 0.07.

In some embodiments, the ratio (A₁+A₂)/A_{shoulder} between (i) a sum A₁+A₂ of the first recess area A₁ and the second recess area A₂ and (ii) the area A_{shoulder} of the first portion 12 is at least 0.010 and at most 0.120. Preferably, the ratio (A₁+A₂)/A_{shoulder} may be at least 0.012 and at most 0.080.

As is further illustrated by Fig. 3, the first recess 22 has an external edge 222 which is an edge of the recess closest to the shoulder portion of the tire and an internal edge 224 opposite the external edge. The external edge 222 is inclined at an angle α to the circumferential direction, i.e., to a plane parallel to the equatorial plane of the tire, and the internal edge is inclined at an angle β to the circumferential direction. In some embodiments, α is at least 0° and at most 35°. Preferably, α is at least 0° and at most 25°. Within this range of inclination angles, the external edge 222 provides a further edge of the tread to further improve lateral grip, especially on snow-covered grounds.

In some embodiments, a ratio (β-α)/α of the inclination angles α and β of the external edge 222 and internal edge 224 of the first recess 22 is at least 0.35 and at most 0.45. Preferably, the ratio (β-α)/α is at least 0.37 and at most 0.43. This relationship between the inclination angles of external edge 222 and internal edge 224 provides for improved capacity of the recesses for trapping snow therein, such that snow performance of the tire can be even further improved.

The embodiments above have been described with respect to the first recess 22 for simplicity. However, one will understand that alternatively, these embodiments are applicable for the external edge 242 and the internal edge 244 of the second recess 24, preferably the specified angles and angle ratios are applied for both the first recess 22 and the second recess 24.

In some embodiments, the first recess 22 and/or the second recess 24 may be arranged at an end of the second groove 20, such that the groove 20 opens into the first recess 22 and/or into the second recess 24, as illustrated in Fig. 3. Moreover, as also illustrated in Fig. 3, in some embodiments, the external edge 222 of the first recess 22 and/or the external edge 242 of the second recess 24 may be adjacent to the first portion 12.

In some embodiments, one edge of the first recess 22 and/or the second recess 24 may be arranged in continuation of one side wall of the second groove 20. This arrangement avoids an additional protuberance which would cause turbulences in water which is guided by the first groove. Thus, this embodiment provides for further improved water drainage and thus provides better traction of the tire on wet road surfaces.

According to Fig. 3B, the at least one recess has a recess extension C measured in a circumferential direction. Thus, to measure the extension C, the recess is projected onto a plane parallel to the equatorial plane 16 of the tire. The recess extension C corresponds to the maximum extension of the recess in this projection.

Further according to Fig. 3B, each of the plurality of second grooves has an extension A measured in a circumferential direction. Thus, to measure the extension A of a second groove 20, a point at the center of a circumferentially forwardmost edge and a point at the center of a circumferentially rearwardmost edge of the second groove are projected onto a plane parallel to the equatorial plane 16 of the tire, and the extension A corresponds to the distance between those projected points.

In some embodiments, a ratio C/A between the recess extension C and the extension of the second groove A may be at least 0.02 and at most 0.2. Preferably, the ratio C/A may be at least 0.05 and at most 0.18.

As discussed above, in some embodiments, the tread may comprise a second recess 24. According to such an embodiment, the second recess 24 may have an extension D measured in a circumferential direction in the same way as explained above for the extension C, such that each of the first recess 22 and the second recess 24 may have a recess extension measured in a circumferential direction. In some embodiments, the ratio between (i) a sum of the recess extension of the first recess 22 and the second recess 24 and (ii) the extension of the second groove 20 may be denoted as (C+D)/A. This ratio (C+D)/A may be at least 0.1 and at most 0.3. Preferably, the ratio (C+D)/A may be at least 0.15 and at most 0.25. Ratios in these ranges provides for a particularly good tradeoff between low wear energy and good mechanical decoupling of the first portion 12 and the second portion 14.

In some embodiments, the recess extensions C and D may be equal. In some embodiments, the recess widths C and D may be different.

According to Figure 3B, the first portion has an extension in circumferential direction adjacent to the second groove 20 and/or the recesses 22, 24, which is denoted by the extension B. The extension B of the first portion 12 can be measured by projecting an axial innermost edge of the first portion, which is adjacent to the axial outermost wall of the second groove 20, onto a plane parallel to the equatorial plane 16 of the tire and then measure the circumferential extension of this projected edge. In some embodiments, the ratio A/B between the extension A of a second groove 20 and the extension B of the first portion 12 may be at least 0.7 and at most 0.9. Preferably, the ratio A/B is at least 0.73 and at most 0.87.

According to some embodiments, the first recess 22 and/or the second recess 24 may have a depth measured in radial direction which is equal to at least 30% of a depth of at least one of the first grooves 18 and second grooves 20, preferably equal to the depth of at least one of the first grooves 18 and second grooves 20. These depths improve the bending and decoupling effect of the recesses and thus allow for improved traction of the tire and reduced wear.

According to some embodiments, a maximum width E, F measured between two opposite edges of the first recess 22 and/or the second recess 24 may be at least 2.5 mm and at most 6.5 mm. Preferably, the maximum width E, F measured between two opposite edges of the first recess 22 and/or the second recess 24 may be at least 3 mm and at most 6 mm.

According to some embodiments, the first recess 22 and/or the second recess 24 may have a height measured in circumferential direction of at least 1.5 mm and at most 4.5 mm. Preferably, the first recess 22 and/or the second recess 24 may have a height measured in circumferential direction of at least 1.6 mm and at most 4 mm.

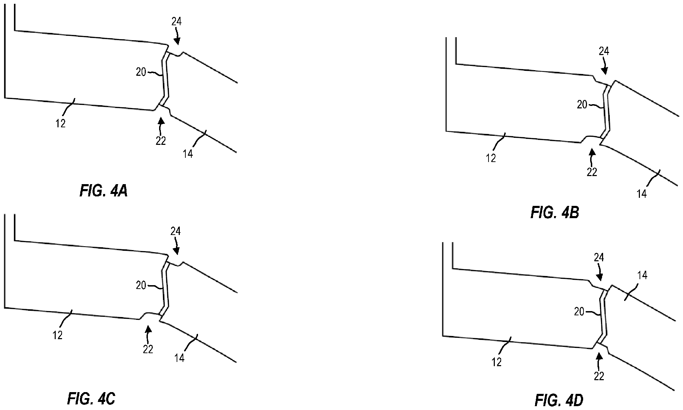

Figs. 4A to 4D illustrate different possible arrangements of the two recesses 22 and 24 adjacent to the second groove 20 which separates the first portion 12 from the second portion 14.

In some embodiments, as illustrated for example in Fig. 4A, the first recess 22 and the second recess 24 are both arranged axially inward from the second groove 20. This embodiment provides for improved breaking performance, because the recesses 22, 24 are generally arranged within the second portion 14. This way, the area of the first portion 12 is increased with respect to other possible arrangements, such that the breaking performance of the tire can be enhanced.

In another embodiment, as illustrated in Fig. 4B, the first recess 22 and the second recess 24 are both arranged axially outward from the second groove 20. This arrangement of recesses provides increased bending flexibility to the shoulder of the block 10, thus reducing strain and stresses resulting from the tire being pushed towards the ground.

In yet another embodiment, as illustrated in Fig. 4C, the first recess 22 is arranged axially outward from the second groove 20 and the second recess 24 is arranged axially inward from the second groove 20. This arrangement of recesses allows for a more even distribution of voids across the first portion 12 and the second portion 14, keeping more rubber material on the trailing edge of the first portion which is the more stressed in longitudinal maneuvers such as dry braking and accelerating. Thus, breaking/acceleration performance can be improved.

In yet another embodiment, as illustrated in Fig. 4D, the first recess 22 is arranged axially inward from the second groove 20 and the second recess 24 is arranged axially outward from the second groove 20. This arrangement of recesses also allows for a more even distribution of voids across the first portion 12 and the second portion 14. Within this arrangement, more rubber material is kept on the leading edge of the first portion, which provides for improved traction on snow-covered grounds.

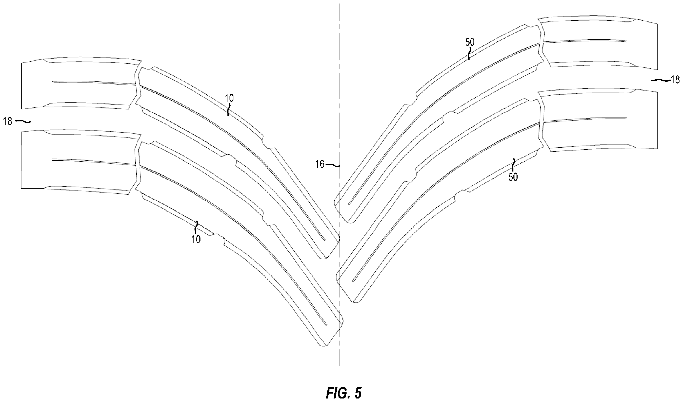

Fig. 5 illustrates an exemplary embodiment of a V-shaped directional tread pattern according to the present disclosure.

According to Fig. 5, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 5, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

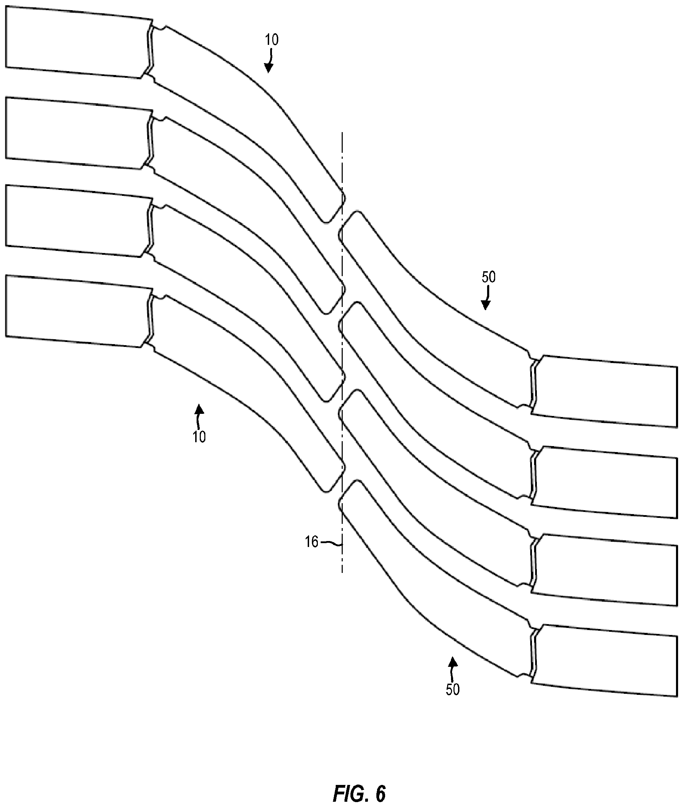

For example, Fig. 6 illustrates a tread pattern according to the present disclosure, which does not have a preferred rolling direction. For some embodiments, according to Fig. 6, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

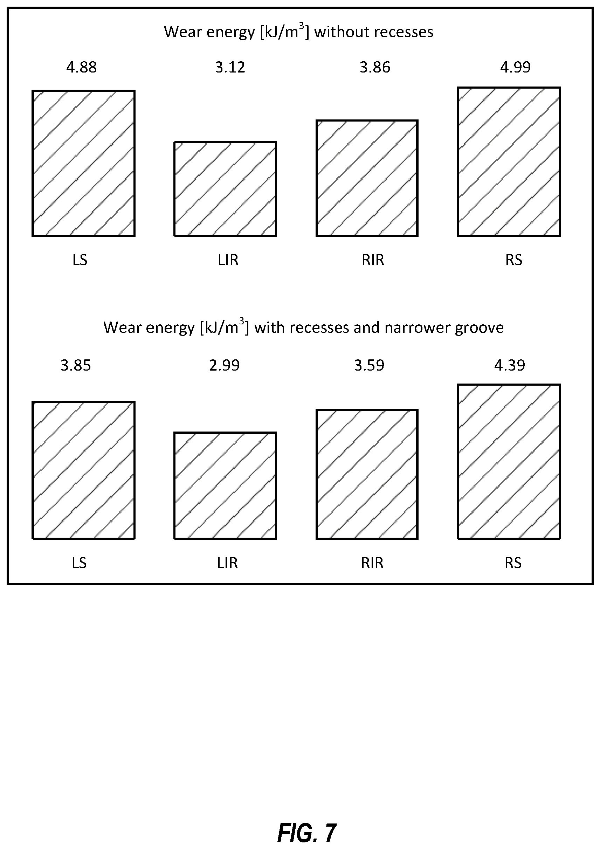

Fig. 7 shows two graphs, illustrating measurements results of wear energy in different axial regions of the tire. Both graphs show the wear energy in units of Joule per cubic meter (J/m³) for four regions of the tread profile, which may correspond to the first portion 12 and the second portion 14, on both sides of the equatorial plane of the tire, respectively. The bar denoted "LS" corresponds to the first portion 12 on the left side of the equatorial plane of the tire. The bar denoted "LIR" corresponds to the second portion 14 on the left side of the equatorial plane of the tire. The bar denoted "RIR" corresponds to the second portion 14 on the right side of the equatorial plane of the tire. The bar denoted "RS" corresponds to the first portion 12 on the right side of the equatorial plane of the tire.

The upper graph illustrates the measurement results for a V-shaped pattern as shown in and described above with respect to Fig. 5, but with a "wide" second groove, i.e., without the invention applied. The lower graph illustrates the measurement results for a V-shaped pattern with the invention applied, i.e., with a narrower second groove 20 and recesses 22 and 24 applied. The tires of both measurements have comparable overall surface void, such that the difference in performance can be attributed to the improved distribution of voids across the tire according to the present invention.

As can be seen from the graphs, with the invention applied the wear energy is lower than with than wider groove and without the recesses for each of the analyzed tire portions. Furthermore, the difference in wear between the individual portions has been shown to be lowered by providing a narrow groove and recesses adjacent thereto, which ultimately leads to a more uniform wear of the tire during the use cycle and thus lowers unevenness due to imbalanced wear of the tread profile.

### Tire footprint measurement

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

### Tire void volume and rubber volume measurement

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

### List of reference numbers

- 10, 50: block
- 12: first portion
- 14: second portion
- 16: equatorial plane
- 18: first groove
- 20: second groove
- 22, 24: recess
- 30: sipe
- 100: tire
- 110: tread
- 120: circumferential direction
- 130: axial direction
- 140: radial direction
- 150: center
- 222, 242: external edge
- 224, 244: internal edge
In the following preferred embodiments are described to facilitate a deeper understanding of the invention.
Embodiment 1: A tire for a vehicle comprising a tread, the tread comprising:
   a set of consecutive blocks arranged along a circumference of the tire, each of the set of consecutive blocks comprising a first portion arranged at a shoulder portion of the tire, and a second portion arranged in axial direction towards an equatorial plane of the tire with respect to the first portion,
   a plurality of first grooves arranged over the circumference of the tire, wherein each of the plurality of first grooves is arranged between two blocks of the set of consecutive blocks;
   a plurality of second grooves, wherein each of the second grooves is arranged between the first portion and the second portion of each of the set of blocks; and
   at least one recess arranged in at least one of the first portion and the second portion of each block, the recess arranged adjacent to the second groove.
Embodiment 2: The tire of Embodiment 1, wherein the width of the each of the plurality of second grooves is substantially narrower than the width of each of the plurality of first grooves.
Embodiment 3: The tire of any one of the preceding Embodiments, wherein a width of each of the plurality of second grooves is at least 1 mm and at most 2.5 mm.
Embodiment 4: The tire of any one of the preceding Embodiments, wherein each block comprises a leading edge and a trailing edge, and wherein the at least one recess is further arranged in at least one of the leading edge and the trailing edge of the at least one of the first portion and the second portion of each block.
Embodiment 5: The tire of any one of the preceding Embodiments, wherein the at least one recess has a recess extension measured in a circumferential direction, wherein each of the plurality of second grooves has an extension measured in a circumferential direction, and wherein the ratio between the recess extension and the extension of the second groove is at least 0.02 and at most 0.2.
Embodiment 6: The tire of any one of Embodiments 1 to 4, wherein the at least one recess comprises a first recess and a second recess, each of the first recess and the second recess arranged adjacent to the second groove.
Embodiment 7: The tire of Embodiment 6, wherein the first recess is located in at least one of the leading edge of the first portion and the leading edge of the second portion, and the second recess is located in at least one of the trailing edge of the first portion and the trailing edge of the second portion.
Embodiment 8: The tire of Embodiment 6, wherein each of the first recess and the second recess has a recess extension measured in a circumferential direction, wherein each of the plurality of second grooves has an extension measured in a circumferential direction, and wherein the ratio between (i) a sum of the recess extension of the first recess and the second recess and (ii) the extension of the second groove is at least 0.1 and at most 0.3.
Embodiment 9: The tire of any one of Embodiments 6 to 8, wherein the first recess has a first recess area, the second recess has a second recess area, and each of the plurality of second grooves has a second groove area, wherein at least one of the following conditions applies:
   (a) a ratio between (i) a sum of the first recess area and the second recess area and (ii) the second groove area is at least 0.3 and at most 1.4;
   (b) a ratio between (i) the second groove area and (ii) an area of the first portion is at least 0.020 and at most 0.100; and
   (c) a ratio between (i) a sum of the first recess area and the second recess area, and (ii) an area of the first portion is at least 0.010 and at most 0.120.
Embodiment 10: The tire of any one of the preceding Embodiments, the tread further comprising: a plurality of sipes, each of the plurality of sipes extending substantially along a shape of at least one of the first portion and the second portion of each of the set of consecutive blocks, the plurality of sipes defining an edge ingredient, EI, corresponding to the ratio between a sum of projected lengths of the plurality of sipes in an axial direction, SAP, and the circumference of the tread, C, such that $EI = \frac{\sum SAP}{C} ,$ wherein the EI is at least 2 and at most 20.
Embodiment 11: The tire of any one of the preceding Embodiments, wherein the ratio between void volume and rubber volume is at least 0.20 and at most 0.40.
Embodiment 12: The tire of any one of the preceding Embodiments, wherein the at least one recess has an external edge which is an edge of the recess closest to the shoulder portion of the tread, and an internal edge which is opposite to the external edge, wherein the external edge is inclined at an angle α to the circumferential direction, and the internal edge is inclined at an angle β to the circumferential direction, and wherein at least one of the following conditions applies:
   (a) α is at least 0° and at most 35°; and
   (b) the ratio (β-α)/α is at least 0.35 and at most 0.45.
Embodiment 13: The tire of any one of the preceding Embodiments, wherein the at least one recess has at least one of:
   - a depth equal to at least 30% of a depth of at least one of the first grooves and second grooves, preferably equal to the depth of at least one of the first grooves and second grooves,
   - a maximum width measured between two opposite edges of the at least one recess of at least 2.5 mm and at most 6.5 mm, and
   - a height measured in circumferential direction of at least 1.5 mm and at most 4.5 mm.

## Claims

1. A tire for a vehicle comprising a tread, the tread comprising:
a set of consecutive blocks arranged along a circumference of the tire, each of the set of consecutive blocks comprising a first portion arranged at a shoulder portion of the tire, and a second portion arranged in axial direction towards an equatorial plane of the tire with respect to the first portion,
a plurality of first grooves arranged over the circumference of the tire, wherein each of the plurality of first grooves is arranged between two blocks of the set of consecutive blocks;
a plurality of second grooves, wherein each of the second grooves is arranged between the first portion and the second portion of each of the set of blocks; and
at least one recess arranged in at least one of the first portion and the second portion of each block, the recess arranged adjacent to the second groove,
wherein the at least one recess comprises a first recess and a second recess, each of the first recess and the second recess arranged adjacent to the second groove,
wherein each of the first recess and the second recess has a recess extension measured in a circumferential direction,
wherein each of the plurality of second grooves has an extension measured in a circumferential direction, and
wherein the ratio between (i) a sum of the recess extension of the first recess and the second recess and (ii) the extension of the second groove is at least 0.1 and at most 0.3.

2. The tire of claim 1, wherein the width of the each of the plurality of second grooves is substantially narrower than the width of each of the plurality of first grooves.

3. The tire of any one of the preceding claims, wherein a width of each of the plurality of second grooves is at least 1 mm and at most 2.5 mm.

4. The tire of any one of the preceding claims, wherein each block comprises a leading edge and a trailing edge, and wherein the at least one recess is further arranged in at least one of the leading edge and the trailing edge of the at least one of the first portion and the second portion of each block.

5. The tire of any one of the preceding claims,
wherein the at least one recess has a recess extension measured in a circumferential direction,
wherein each of the plurality of second grooves has an extension measured in a circumferential direction, and
wherein the ratio between the recess extension and the extension of the second groove is at least 0.02 and at most 0.2.

6. The tire of any one of claims 1 to 4, wherein the first recess is located in at least one of the leading edge of the first portion and the leading edge of the second portion, and the second recess is located in at least one of the trailing edge of the first portion and the trailing edge of the second portion.

7. The tire of any one of claims 1 to 4 or 6,
wherein the first recess has a first recess area, the second recess has a second recess area, and each of the plurality of second grooves has a second groove area, wherein at least one of the following conditions applies:
(a) a ratio between (i) a sum of the first recess area and the second recess area and (ii) the second groove area is at least 0.3 and at most 1.4;
(b) a ratio between (i) the second groove area and (ii) an area of the first portion is at least 0.020 and at most 0.100; and
(c) a ratio between (i) a sum of the first recess area and the second recess area, and (ii) an area of the first portion is at least 0.010 and at most 0.120.

8. The tire of any one of the preceding claims, the tread further comprising:
a plurality of sipes, each of the plurality of sipes extending substantially along a shape of at least one of the first portion and the second portion of each of the set of consecutive blocks,
the plurality of sipes defining an edge ingredient, EI, corresponding to the ratio between a sum of projected lengths of the plurality of sipes in an axial direction, SAP, and the circumference of the tread, C, such that $EI = \frac{\sum SAP}{C} ,$
wherein the EI is at least 2 and at most 20.

9. The tire of any one of the preceding claims, wherein the ratio between void volume and rubber volume is at least 0.20 and at most 0.40.

10. The tire of any one of the preceding claims, wherein the at least one recess has an external edge which is an edge of the recess closest to the shoulder portion of the tread, and an internal edge which is opposite to the external edge, wherein the external edge is inclined at an angle α to the circumferential direction, and the internal edge is inclined at an angle β to the circumferential direction, and wherein at least one of the following conditions applies:
(a) α is at least 0° and at most 35°; and
(b) the ratio (β-α)/α is at least 0.35 and at most 0.45.

11. The tire of any one of the preceding claims, wherein the at least one recess has at least one of:
- a depth equal to at least 30% of a depth of at least one of the first grooves and second grooves, preferably equal to the depth of at least one of the first grooves and second grooves,
- a maximum width measured between two opposite edges of the at least one recess of at least 2.5 mm and at most 6.5 mm, and
- a height measured in circumferential direction of at least 1.5 mm and at most 4.5 mm.
